# EUROPEAN PATENT APPLICATION

(11) **EP 2 709 371 A1**
(43) Date of publication of application: **19.03.2014**
(21) Application number: 13181999.7
(22) Date of filing: 28.08.2013
(51) Int. Cl.: H04N 21/43, G09G 5/12, G09G 5/00

(54) **Continuous data delivery with energy conservation**

(30) Priority: 14.09.2012 US 201213616823
(71) Applicant: Intel Corporation, Santa Clara, CA 95054 (US)
(72) Inventor: Stanton, Kevin B., Hillsboro, OR 97123 (US)
(74) Representative: Goddar, Heinz J.

(57) **Abstract**

A device may be configured to receive data in a substantially continuous manner and to present the data to a user. The data may be presented to the user at different presentation rates including at least a first presentation rate and a second presentation rate. For example, the device may be configured to present the data at the first presentation rate until a threshold condition is satisfied, and to then present the data at the second presentation rate. In one embodiment, the first presentation rate may be a rate slower that normally used for the type of data received, which may allow the device to buffer some of the received data in a device memory. Once the amount of buffered data reaches a threshold level in the memory, the device may then increase to the second presentation rate (e.g., the presentation rate typically used for the type of data received).

## Description

### BACKGROUND

Emerging mobile devices have abilities that far exceed standard voice communications. For example, mobile devices may be equipped with one or more transceivers that are configured to facilitate the transmission and reception of information utilizing various wired and/or wireless communication mediums. The ability to efficiently communicate information including voice, text, data, multimedia, etc. allows for the introduction of new functionality into mobile devices related to, for example, interpersonal interactions (e.g., email, messaging, social media, etc.), business, productivity, gaming, shopping, etc. As a result, simple cellular handsets have evolved into powerful multipurpose mobile platforms with the ability to run a large array of applications.

Early applications were directed to baseline communication functionality such as email, messaging, news feeds, etc. However, applications have quickly become more advanced, with the ability to draw on various features in a device. For example, some applications may now be configured to "stream" data (e.g., receive data from a remote source in a substantially continuous manner). The streamed data may include, for example, multimedia information such as video and/or audio information for presentation on the mobile device. Using this functionality, mobile device users may be able to listen to music, view television programming, view movies, view, listen to or participate in presentations, meetings, conferences, etc., all on their mobile device.

### BRIEF DESCRIPTION OF THE DRAWINGS

Features and advantages of various embodiments of the claimed subject matter will become apparent as the following Detailed Description proceeds, and upon reference to the Drawings, wherein like numerals designate like parts, and in which:
FIG. 1 illustrates an example system configured for continuous data delivery with energy conservation in accordance with at least one embodiment of the present disclosure;
FIG. 2 includes an example chart illustrating a relationship between data buffering and presentation rate in accordance with at least one embodiment of the present disclosure;
FIG. 3 includes an example chart illustrating the effect of a configuration change on the relationship of FIG. 3 in accordance with at least one embodiment of the present disclosure;
FIG. 4 includes an example chart illustrating another relationship between data buffering and presentation rate in accordance with at least one embodiment of the present disclosure and FIG. 5 illustrates a flowchart of example operations for continuous data delivery with energy conservation in accordance with at least one embodiment of the present disclosure.

Although the following Detailed Description will proceed with reference being made to illustrative embodiments, many alternatives, modifications and variations thereof will be apparent to those skilled in the art.

### DETAILED DESCRIPTION

While existing technology may facilitate data streaming, it only supports this operation within certain constraints. In one regard, maximum performance (e.g., and the best experience for the mobile device user) may be realized by initiating presentation of streamed data as soon as it is received. However, operating in this manner may place a substantial strain on resources in the mobile device (e.g., battery power). Alternatively, waiting until at least some of the data has been received by the device prior to presentation (e.g., buffering the data) may help to conserve device resources, but results in the presentation of the data being delayed. This delay or latency may appear to be a device malfunction, causing the user to attempt to restart data streaming (e.g., wasting more device resources) or may cause the user to be dissatisfied with denice performance.

This disclosure describes systems and methods for continuous data delivery with energy conservation. Initially, terminology may be defined to provide clarification for the following disclosure. "Streaming" data may be defined as the substantially continuous delivery of data to a device from a remote source. Obtaining data from a source within the device that, for example, has a controllable rate of transfer (e.g., a magnetic, optical, or solid-state storage component) would not be considered streaming for the sake of this disclosure. Receiving data from an external source connected to the device via, for example, an Inter-IC Sound (I²S) input, a Digital Visual Interface (DVI) input, a High-Definition Multimedia Interface (HDMI) input, etc., would be considered streaming for the sake of this disclosure. A device may also stream data from an Internet-accessible source via wired or wireless communication. Streamed data may include, for example, multimedia information such as video and/or audio content. The "presentation" of streamed multimedia information may therefore include displaying video content and/or playing audio content from the streamed data.

In general, a device may be configured to present received data at a presentation rate slower than typically employed for the received data, and to then transition to a faster presentation rate after at least some of the received data has been stored in memory. For example, an application that streams multimedia information including video and/or audio content may be activated in the device, which may immediately began to present the video and/or audio content at a slightly slower rate than normal until at least some information has been buffered in the device. In this manner, latency in the presentation of the received data is minimal since the data presentation initiates immediately after the streaming functionality is activated, but power in the device may still be conserved based on the buffering also initiated at activation. In particular, the buffering of data from the activation of data streaming facilitates larger amounts of data to be processed at one time, allowing device processing resources to act quickly and spend longer periods of time in a power saving mode, reducing overall power consumption in the device while streaming data.

In one embodiment, a device may include, for example, at least a communication module, a memory module and a data presentation module. The communication module may be configured to receive data in a substantially continuous manner (e.g., from a remote source via wired or wireless communication), and to then store the received data in the memory module. The data presentation module may be configured to present the stored data using more than one presentation rate (e.g., playback speed). In an instance where data may be presented using at least a first presentation rate or a second presentation rate, the presentation of the data at the first presentation rate or the second presentation rate may depend on, for example, a threshold condition. In one embodiment the data presentation module may be configured to present the data at the first presentation rate until the occurrence of the threshold condition, and to then present the data at the second presentation rate after the occurrence of the threshold condition.

In the same or another embodiment, the threshold condition may be an amount of data stored in the memory module. The threshold condition may also be based on the quality of a connection over which the data is received in the device. For example, the data presentation module may be configured to present the data at a first presentation rate that is less than (e.g., slower than) the second presentation rate. The presentation of data at the first presentation rate may allow data to accumulate in the memory module (e.g., to be buffered). When enough data has been buffered (e.g., based on the threshold condition) the presentation of data may be increased to the second presentation rate. Presenting the data at a lower presentation rate allows for low latency (e.g., since the data is being presented immediately after activating data streaming) while still allowing some data to be buffered in the memory module. For example, the difference between the presentation of the received data at the first presentation rate and the presentation of received data at the second presentation rate is substantially imperceptible to a user of the device listening to, viewing or otherwise observing the presentation.

In one embodiment, the rate at which the received data is presented may be controlled by functionality incorporated into the device hardware (e.g., in a processing module in the device). In such a configuration, the presentation module may be at least partly implemented as software configured to cause the device hardware to present the received data at the first presentation rate or the second presentation rate based on, for example, the occurrence of the threshold condition. Alternatively, the above presentation rate control may be orchestrated entirely through software.

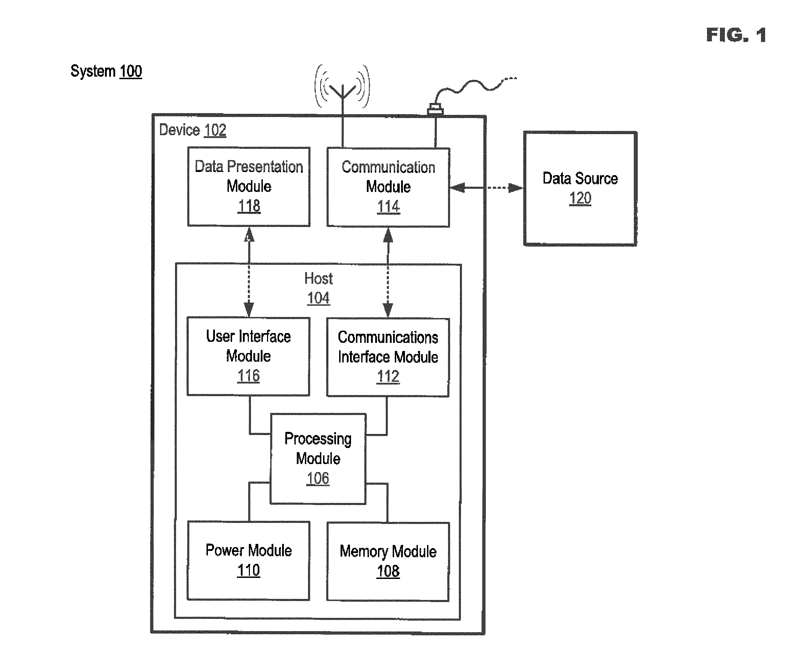

FIG. 1 illustrates example system 100 configured for continuous data delivery with energy conservation in accordance with at least one embodiment of the present disclosure. System 100 may include, for example, device 102 and data source 120. Examples of device 102 may include, but are not limited to, a mobile communication device such as a cellular handset or a smartphone based on the Android® operating system (OS), iOS®, Blackberry® OS, Palm® OS, Symbian® OS, etc., a mobile computing device such as a tablet computer like an iPad®, Galaxy Tab®, Kindle Fire®, Microsoft Surface®, etc., an Ultrabook® including a low-power chipset manufactured by Intel Corporation, a netbook, a notebook computer, a laptop computer, a typically stationary computing device like a desktop computer, etc. Device 102 may include, for example, host 104, communication module 114 and data presentation module 118. While communication module 114 and data presentation module 118 have been show separate from, but coupled to, host 104, it is also possible for one or both of these modules to be incorporated within host 104. In system 100, device 102 may be configured to interact with at least data source 120 via wired or wireless communication (e.g., via communication module 114). Data source 120 may include at least one remotely situated device configured to provide data to device 102 in a substantially continuous manner. For example, data source 120 may be at least one server accessible via the internet configured to provide data (e.g., multimedia information including video and/or audio information) to device 102 via wired or wireless communication.

Host 104 may include, for example, processing module 106, memory module 108, power module 110, communications interface module 112 (which may be configured to interact with communication module 114) and user interface module 116 (which may be configured to interact with data presentation module 118). For example, processing module 106 may comprise one or more processors in separate components, or alternatively, may comprise one or more processing cores embodied in a single component (e.g., in a system-on-a-chip (SOC) configuration) and any processor-related support circuitry (e.g., bridging interfaces, etc.). Example processors may include various x86-based microprocessors available from the Intel Corporation including those in the Pentium, Xeon, Itanium, Celeron, Atom, Core i-series product families. Examples of support circuitry may include chipsets (e.g., Northbridge, Southbridge, etc. available from the Intel Corporation) configured to provide an interface through which processing module 106 may interact with other system components that may be operating in device 102 at different speeds, on different buses, etc. Some or all of the functionality commonly associated with the support circuitry may also be included in the same physical package as the processor such as in the SOC architecture (e.g., the Sandy Bridge SOC integrated circuit available from the Intel Corporation).

Processing module 106 may be configured to execute instructions in device 102. Instructions may include program code configured to cause processing module 106 to perform activities related to reading data, writing data, processing data, formulating data, converting data, transforming data, etc. Information (e.g., instructions, data, etc.) maybe stored in memory module 108. For example, in at least one embodiment processing module 106 may be configured with instructions to control the rate (e.g., rendering speed) at which received data is presented. Memory module 108 may comprise random access memory (RAM) and/or read-only memory (ROM) in a fixed or removable format. RAM may include memory configured to hold information during the operation of device 102 such as, for example, static RAM (SRAM) or Dynamic RAM (DRAM). ROM may include memories such as bios memory configured to provide instructions when device 102 activates, programmable memories such as electronic programmable ROMs, (EPROMS), Flash, etc. Other fixed and/or removable memory may include magnetic memories such as floppy disks, hard drives, etc., electronic memories such as solid state flash memory (e.g., eMMC, etc.), removable memory cards or memory sticks (e.g., uSD, USB, etc.), optical memories such as compact disc-based ROM (CD-ROM), etc. Memory module 108 may be accessed (e.g., data may be read from, or written to, memory module 108) via actions taken by processing module 106, or alternatively, via direct inter-module interaction. For example, direct memory access (DMA) is a technique whereby other modules in device 102 (e.g., modules 110 to 118) may read directly from and/or write directly to memory module 108.

Power module 110 may include internal power sources (e.g., a battery) and/or external power sources (e.g., a power grid, an electromechanical or solar generator, etc.), and related circuitry configured to supply device 102 with the power needed to operate. Communications interface module 112 may be configured to handle packet routing and other control functions for communication module 114, which may include resources configured to support wired and/or wireless communications. Wired communications may include serial and parallel wired mediums such as, for example, Ethernet, Universal Serial Bus (USB), Firewire, I²S, DVI, HDMI, etc. Wireless communications may include, for example, close-proximity wireless mediums (e.g., radio frequency (RF) such as in RF identification (RFID) or based on the Near Field Communications (NFC) standard, infrared (IR), optical character recognition (OCR), magnetic character sensing, etc.), short-range wireless mediums (e.g., Bluetooth, wireless local area networking (WLAN), Wi-Fi, etc.) and long range wireless mediums (e.g., cellular, satellite, etc.). In one embodiment, communications interface module 112 may be configured to prevent wireless communications that are active in communication module 114 from interfering with each other. In performing this function, communications interface module 112 may schedule activities for communication module 114 based on, for example, the relative priority of messages awaiting transmission.

User interface module 116 may include circuitry configured to allow users to interact with device 102 such as, for example, various input mechanisms (e.g., microphones, switches, buttons, knobs, keyboards, speakers, touch-sensitive surfaces, one or more sensors configured to capture images and/or sense proximity, distance, motion, gestures, etc.) and output mechanisms (e.g., speakers, displays, lighted/flashing indicators, electromechanical components for vibration, motion, etc.). User interface module 116 may be configured to interact with, or possibly include, data presentation module 118. Data presentation module 118 may be configured to receive data from memory module 108 (e.g., either via processor 106 or via direct interaction with memory module 108 through a technique such as DMA) and may present the data to a user of device 102 via resources available in user interface module 116. For example, data presentation module 118 may include at least an application configured to cause device 102 to start receiving data from data source 120, the data including multimedia information such as video and/or audio content. The data may be received on a substantially continuous basis. Data presentation module 118 may then cause the multimedia information to be presented to a user of device 102 via one or more elements of user interface module 116 (e.g., video may be displayed on a device display, audio may be played through device speakers or another audio reproduction apparatus connected to device 102, etc.). In causing the multimedia information to be presented to the user, data presentation module 118 may control the speed (e.g., rate) at which the content is presented, the appearance of video, the volume of audio and various other characteristics of the presentation. In an embodiment where, for example, processing module 106 may incorporate, or is configured to include, data presentation rate control functionality, some or all of data presentation module 118 may be implemented as software (e.g., as part of an application) configured to cause processing module 106 to present received data at the first presentation rate or the second presentation rate.

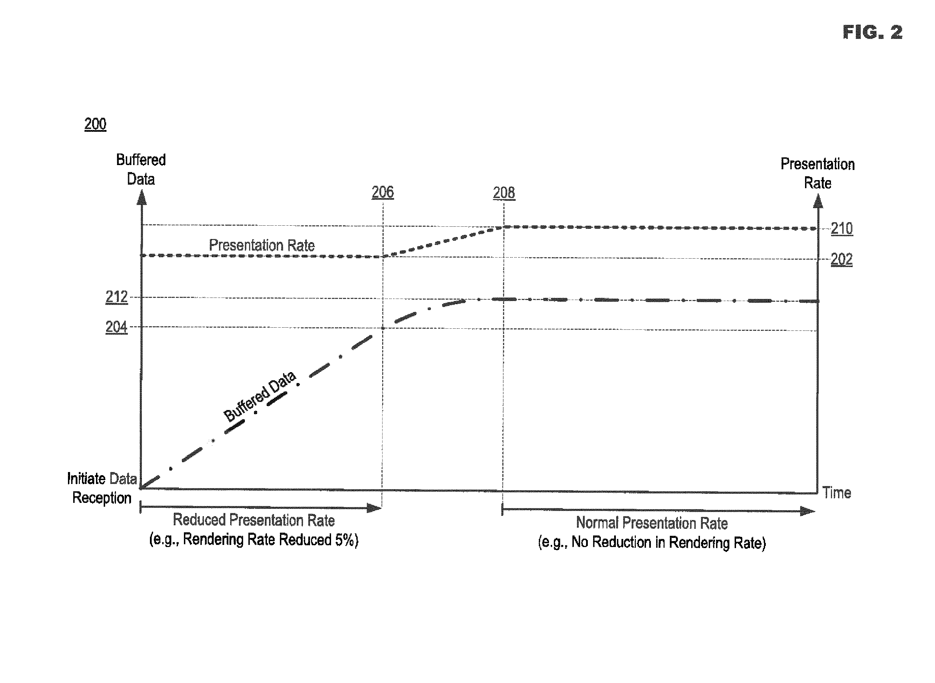

FIG. 2 includes example chart 200 illustrating a relationship between data buffering and presentation rate in accordance with at least one embodiment of the present disclosure. For example, chart 200 illustrates time on the horizontal axis with respect to an amount of buffered data (e.g., data stored in memory module 108) on the left vertical axis and the rate at which the data is presented (e.g., by data presentation module 118) on the right vertical axis. An interleaved dash and dot ("dash-dot") line corresponds to the amount of data buffered, while presentation rate is illustrated by a dotted line. It is important to note that the buffered data and presentation rate lines in chart 200 are not drawn to scale, and are provided only as an example to represent the relative behavior between buffered data and presentation rate consistent with at least one embodiment of the present disclosure.

When the reception of data initiates in device 102 (e.g., at time 0), the received data may be presented at first presentation rate 202 that is less than a "normal" rate (e.g., the typical rate at which the type of content received is presented). For example, if video is received the rendering rate of the video may be reduced by five percent (5%) over the typical video rendering rate. The rate of video rendering may also be reduced by other rates (e.g., the actual reduction in rate may correspond to the type of data being received, how the received data is being utilized, etc.). For example, a goal of reducing the rate may be to save power in the device while not substantially altering the viewing and/or listening experience of the user. A small reduction in the presentation rate will generally not be discernible by the user.

As a result of lower presentation rate 202, buffered data may begin to accumulate, rising to predetermined threshold condition level 204. Threshold condition level 204 may be based on, for example, a compromise between the reduced performance provided at the first presentation rate and the amount of energy that will be conserved by buffering the received data. However, threshold condition level 204 is not limited only for this purpose, and thus, other embodiments consistent with the present disclosure may include thresholds based on other criteria. Threshold condition level 204 may also be variable depending on, for example, the condition of device 102, the streaming data, etc. For example, the threshold may be set based on instability (e.g., jitter) in a connection over which data is being received. In order to minimize the effect of the instability on data presentation, threshold condition level 204 may be set to keep the presentation rate low (e.g., at the first presentation rate) until the instability in the connection subsides or is resolved. If streaming over a 3G/4G wireless link, threshold condition level 204 may also be based upon the initial presentation rate and/or uncertainty about the receipt of future content and/or the rate at which the future content may be provided. The probably of "underflow" (e.g., due to data being received at a rate less that the presentation rate) may be higher if the initial presentation of content occurs immediately after the receipt of streamed data. In instances where a network link may be very lossy (e.g., some wireless connections), it may be beneficial to lower the probability of underflow by reducing the presentation rate in the beginning and then raising the presentation rate after an adequate amount data has been buffered to account for possible network problems.

When the amount of data in the buffer reaches threshold condition level 204, which corresponds to time instance 206, the presentation rate may start to be increase gradually. The presentation rate may be increased gradually over time so that, for example, the perceived difference between the first and second presentation rate is minimized for the user. Gradually increasing the presentation rate starting at time instance 206 would similarly increase the rate at which stored data is being consumed from memory, and as a result, the rate at which data is being buffered may gradually decrease starting at time instance 206. At time instance 208 the presentation rate may be at second presentation rate 210, which may be the "normal" presentation rate (e.g., the presentation rate at which the type of received data is typically presented). The amount of buffered data may be maintained at a substantially constant level at 212, allowing processing module 106 to enter an active mode, process large chunks of data in preparation for presentation, and to then return to a power saving mode, which will help conserve power in device 102. Presentation module 118 may retrieve the processed data (e.g., directly from memory module 108 via DMA) and may present the data using the resources of user interface module 116 at second presentation rate 210.

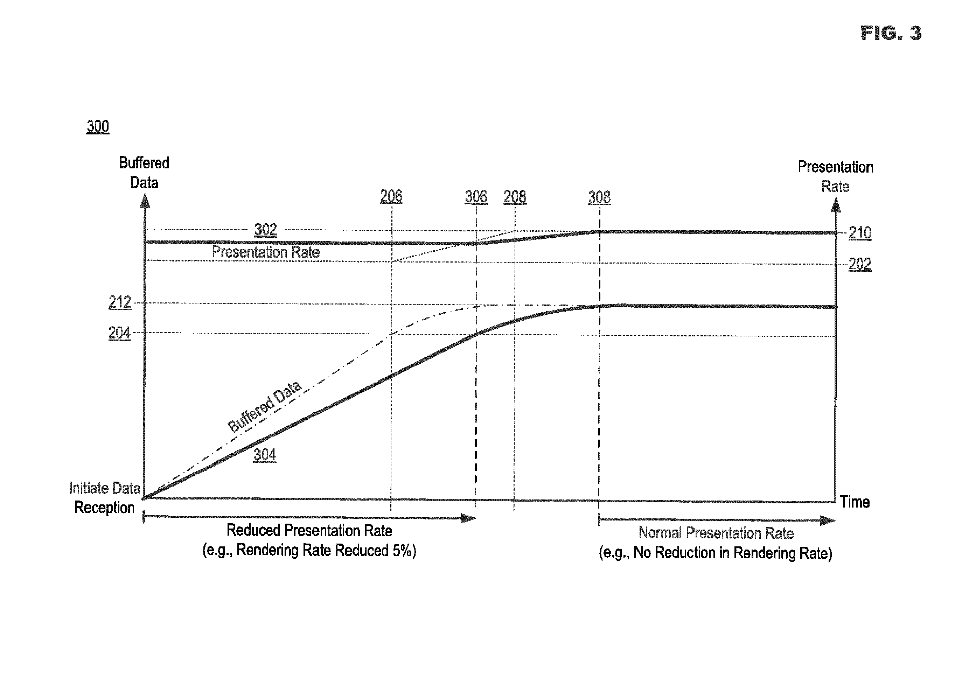

In some instances, greater accuracy may be desired in the presentation based on the received data, and so the presentation rate reduction may be limited, for example, automatically based on multimedia information type, based on user configuration (e.g., the user temporarily opts for "high quality" presentation over power conservation), etc. An example is disclosed in FIG. 3 wherein the presentation rate reduction is limited so that only a slight drop is realized in the presentation rate (e.g., solid line illustrated at 302). For example, if musical performances are streamed for the purpose of accompaniment by a singer, musical instruments, etc., it may be beneficial to limit the amount of rate reduction so that the musical performance is presented in a high-quality manner. Allowing the rate to be reduced may slightly alter pitch, intonation, etc. of the streamed musical performance, and may negatively impact the learning process and/or actual performance of the accompanist. In another example scenario, device 102 may have only limited resources available (e.g., free memory in memory module 108) for buffering received data. As a result, while limiting the amount of presentation rate reduction could impact the stability of the presentation (e.g., a network delay or jitter may cause interruptions in the presentation), it may also be required so as not to overwhelm the available resources in device 102.

Regardless of the reason for limiting the amount of presentation rate reduction, a possible effect of limiting presentation rate reduction is shown in the change in data buffering illustrated by the solid line at 304. The higher presentation rate will consume more received data, and thus, data may be buffered more slowly. For example, the presentation rate may stay reduced for a longer time (e.g., until time instance 306) where it may then ramp up to a normal presentation rate (e.g., time instance 308). While operating in this manner may result in greater presentation accuracy, the stability of the presentation may be more vulnerable to network connection issues for a longer period of time (e.g., until the buffer reaches constant level 212 at time instance 308).

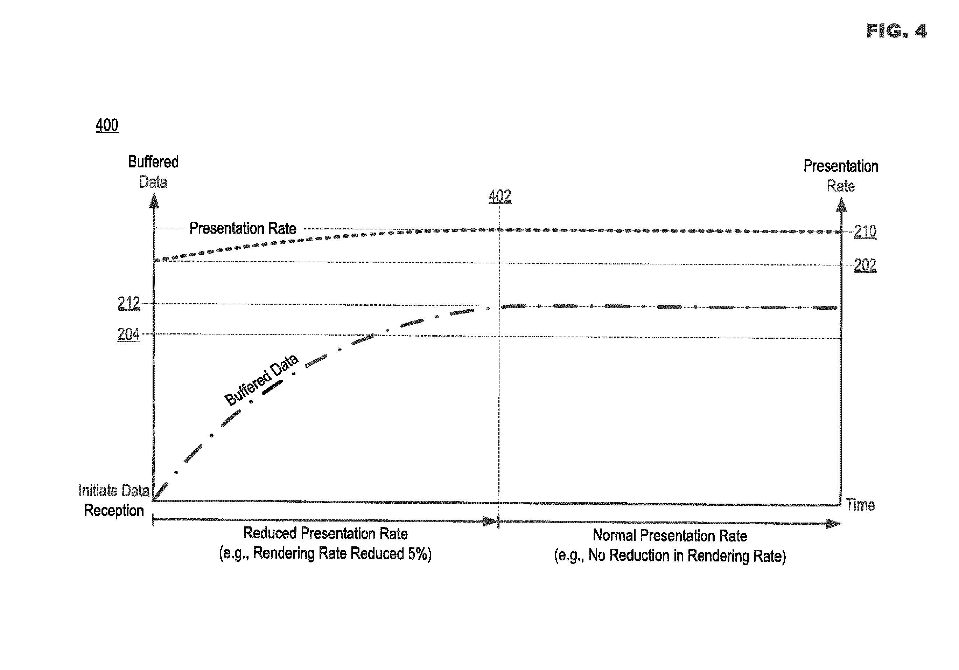

Consistent with the present disclosure, it may also be possible for the presentation rate to increase from first presentation rate 202 to second presentation rate 210 in a different manner. An example of an alternative presentation rate ramp is disclosed in FIG. 4. In one embodiment, immediately after data reception starts in device 102 the presentation rate may begin increasing from first presentation rate 202 at a parabolic rate of increase until second presentation rate 210 (e.g., the normal presentation rate) is attained at 402. Likewise, the rate at which data is buffered may initially be high but may gradually decrease as a function of the presentation rate until the buffered data reaches constant level 212 at 402. An advantage of a parabolic rate increase such as shown in FIG. 4 is that the changes to the presentation rate are constant and smooth, which may make it more difficult for a user to detect these changes when observing the presentation.

While not shown in FIG. 2, in one embodiment there may be more than two presentation rates. For example, the presentation rate may traverse through any number of presentation rates from an initial slowest rate to the fastest (e.g., normal) rate based on the configuration of system 100. Including more than two presentation rates may depend on, for example, the abilities of device 102. Utilizing more than two presentation rates may provide more flexibility for controlling the presentation of data to, for example, account for unstable data stream conditions, minimize the changes in the presentation perceived by the user by making the rate increase more gradual, etc. In addition, it may be possible for the presentation rate to decrease after increasing to the second presentation rate (e.g., the normal presentation rate). For example, changing from one type of network link to another (e.g., 3G to WLAN), detecting instability in the network link, etc. may dictate a need to increase the amount of buffered data to account for possible underflow. As a result, the presentation rate may be reduced in order to increase the amount of data buffered in device 102. This allows device 102 to continue presentation even if data underflow occurs, as opposed to existing devices that stop the presentation, display a wait or "buffering" screen, etc. In addition, changes in presentation rate may continue to move between the normal presentation rate and lower presentation rates as the device senses changes in network stability, condition, etc.

In one embodiment, reductions in presentation rate may be minimized through the use of algorithmic processing. For example, signal processing algorithms may be employed to change the "tempo" of audio information (e.g., music, video sound track, etc.) without affecting the pitch of the audio information. An example of an algorithm currently in use is the "Amazing Slow Downer." This technology may be employed to mask the impact of reducing the presentation rate, allowing data buffering to occur without substantially impacting the quality of presentation. As a result, multimedia content derived from the received data may appear completely normal to a user while it is, in actuality, being presented at a slower than normal rate.

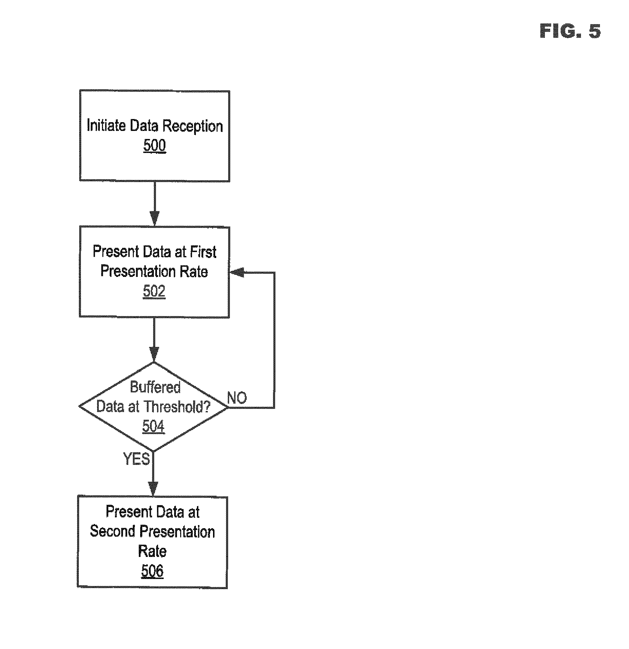

FIG. 5 illustrates a flowchart of example operations for continuous data delivery with energy conservation in accordance with at least one embodiment of the present disclosure. In operation 500 data reception may be initiated. For example, an application may be activated in a device, the application being configured to receive data in a substantially continuous manner and to then present the received data to a device user (e.g., an application that streams multimedia information including video and/or audio content). The device may be initially configured to present the received data at a first presentation rate in operation 502. The first presentation rate may be, for example, a reduced presentation rate that allows at least some of the received data to be buffered in the memory of the device. In operation 504 a determination may then be made as to whether the buffered data satisfies a threshold condition. For example, a determination may be made as to whether the amount of buffered data has reached a predetermined level. If it is determined that the buffered data has not satisfied the threshold condition, then the received data may continue to be presented at the first presentation rate. Otherwise, if it is determined that the buffered data has satisfied the threshold condition, then in operation 506 the received data may be presented at the second presentation rate. For example, the second presentation rate may be the presentation rate at which data of the received data type is typically presented on the device.

While FIG. 5 illustrates various operations according to an embodiment, it is to be understood that not all of the operations depicted in FIG. 5 are necessary for other embodiments. Indeed, it is fully contemplated herein that in other embodiments of the present disclosure, the operations depicted in FIG. 5, and/or other operations described herein, may be combined in a manner not specifically shown in any of the drawings, but still fully consistent with the present disclosure. Thus, claims directed to features and/or operations that are not exactly shown in one drawing are deemed within the scope and content of the present disclosure.

As used in any embodiment herein, the term "module" may refer to software, firmware and/or circuitry configured to perform any of the aforementioned operations. Software may be embodied as a software package, code, instructions, instruction sets and/or data recorded on non-transitory computer readable storage mediums. Firmware may be embodied as code, instructions or instruction sets and/or data that are hard-coded (e.g., nonvolatile) in memory devices. "Circuitry", as used in any embodiment herein, may comprise, for example, singly or in any combination, hardwired circuitry, programmable circuitry such as computer processors comprising one or more individual instruction processing cores, state machine circuitry, and/or firmware that stores instructions executed by programmable circuitry. The modules may, collectively or individually, be embodied as circuitry that forms part of a larger system, for example, an integrated circuit (IC), system on-chip (SoC), desktop computers, laptop computers, tablet computers, servers, smart phones, etc.

Any of the operations described herein may be implemented in a system that includes one or more storage mediums having stored thereon, individually or in combination, instructions that when executed by one or more processors perform the methods. Here, the processor may include, for example, a server CPU, a mobile device CPU, and/or other programmable circuitry. Also, it is intended that operations described herein may be distributed across a plurality of physical devices, such as processing structures at more than one different physical location. The storage medium may include any type of tangible medium, for example, any type of disk including hard disks, floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic and static RAMs, erasable programmable read-only memories (EPROMs), electrically erasable programmable read-only memories (EEPROMs), flash memories, Solid State Disks (SSDs), embedded multimedia cards (eMMCs), secure digital input/output (SDIO) cards, magnetic or optical cards, or any type of media suitable for storing electronic instructions. Other embodiments may be implemented as software modules executed by a programmable control device.

Thus, the present disclosure provides systems and methods for continuous data delivery with energy conservation. A device may be configured to receive data in a substantially continuous manner and to present the data to a user. The data may be presented to the user at different presentation rates including at least a first presentation rate and a second presentation rate. For example, the device may be configured to present the data at the first presentation rate until a threshold condition is satisfied, and to then present the data at the second presentation rate. In one embodiment, the first presentation rate may be a rate slower that normally used for the type of data received, which may allow the device to buffer some of the received data in a device memory. Once the amount of buffered data reaches a threshold level in the memory, the device may then increase to the second presentation rate (e.g., the presentation rate typically used for the type of data received).

The following examples pertain to further embodiments. In one example embodiment there is provided a device. The device may a communication module configured to at least receive data, a memory module configured to buffer the received data, and a data presentation module configured to present the received data at different presentation rates including at least a first presentation rate and a second presentation rate.

The above example device may be further configured, wherein the received data includes multimedia content and presenting the received data comprises at least one of displaying video content or playing audio content.

The above example device may be further configured, wherein the data is received by the communication module in a substantially continuous manner.

The above example device may be further configured, wherein the data presentation module is further configured to present the received data at the first presentation rate until a threshold condition occurs, and to then present the received data at the second presentation rate. In this configuration, the example device may be further configured, wherein the threshold condition is an amount of data received in the memory module. In this configuration, the example device may be further configured, wherein the threshold condition is based on quality for a connection over which the communication module receives the data.

The above example device may be further configured, wherein the first presentation rate is less than the second presentation rate. In this configuration, the example device may be further configured, wherein the difference between presentation of the received data at the first presentation rate and presentation of received data at the second presentation rate is substantially imperceptible to a user of the device viewing the presentation.

The above example device may further comprise a processing module, the data presentation module being configured to cause the processing module to present the received data at a first presentation rate and to then present the received data at a second presentation rate.

In another example embodiment there is provided a method. The method may include receiving data in a device, storing the received data in a device memory and presenting the received data at different presentation rates including at least a first presentation rate and a second presentation rate.

The above example method may be further configured, wherein the received data includes multimedia content and presenting the received data comprises at least one of displaying video content or playing audio content.

The above example method may be further configured, wherein the data is received in a substantially continuous manner.

The above example method may be further configured, wherein the received data is presented at the first presentation rate until a threshold condition occurs, and is then presented at the second presentation rate. In this configuration, the example method may be further configured, wherein the threshold condition is an amount of data received in the device memory. In this configuration, the example method may be further configured, wherein the threshold condition is based on quality for a connection over which the data is received in the device.

The above example method may be further configured, wherein the first presentation rate is less than the second presentation rate. In this configuration, the example method may be further configured, wherein the difference between presentation of the received data at the first presentation rate and presentation of received data at the second presentation rate is substantially imperceptible to a user of the device viewing the presentation.

In another example embodiment there is presented a system including at least a device and a data source, the system being arranged to perform any of the above example methods.

In another example embodiment there is presented a chipset arranged to perform any of the above example methods.

In another example embodiment there is presented at least one machine readable medium comprising a plurality of instructions that, in response to be being executed on a computing device, cause the computing device to carry out the method according to any if the above example methods.

In another example embodiment there is presented a device configured for continuous data delivery with energy conservation, the device being arranged to perform any of the above example methods.

In another example embodiment there is provided a system comprising at least one machine-readable storage medium having stored thereon, individually or in combination, instructions that when executed by one or more processors result in the system performing any of the above example methods.

In another example embodiment there is presented a device. The device may include a communication module configured to at least receive data, a memory module configured to buffer the received data, and a data presentation module configured to present the received data at different presentation rates including at least a first presentation rate and a second presentation rate.

The above example device may be further configured, wherein the received data includes multimedia content and presenting the received data comprises at least one of displaying video content or playing audio content.

The above example device may be further configured, wherein the data presentation module is further configured to present the received data at the first presentation rate until a threshold condition occurs, and to then present the received data at the second presentation rate. In this configuration, the example device may be further configured, wherein the threshold condition is an amount of data received in the memory module. In this configuration, the example device may be further configured, wherein the threshold condition is based on quality for a connection over which the communication module receives the data.

The above example device may be further configured, wherein the first presentation rate is less than the second presentation rate, the difference between presentation of the received data at the first presentation rate and presentation of received data at the second presentation rate being substantially imperceptible to a user of the device viewing the presentation.

In another example embodiment there is presented a method. The method may include receiving data in a device, storing the received data in a device memory, and presenting the received data at different presentation rates including at least a first presentation rate and a second presentation rate.

The above example method may be further configured, wherein the received data includes multimedia content and presenting the received data comprises at least one of displaying video content or playing audio content.

The above example method may be further configured, wherein the received data is presented at the first presentation rate until a threshold condition occurs, and is then presented at the second presentation rate. In this configuration, the example method may be further configured, wherein the threshold condition is an amount of data received in the device memory. In this configuration, the example method may be further configured, wherein the threshold condition is based on quality for a connection over which the data is received in the device.

The above example method may be further configured, wherein the first presentation rate is less than the second presentation rate, the difference between presentation of the received data at the first presentation rate and presentation of received data at the second presentation rate being substantially imperceptible to a user of the device viewing the presentation.

In another example embodiment there is presented a system including at least a device and a data source, the system being arranged to perform any of the above example methods.

In another example embodiment there is presented a chipset arranged to perform any of the above example methods.

In another example embodiment there is presented at least one machine readable medium comprising a plurality of instructions that, in response to be being executed on a computing device, cause the computing device to carry out the method according to any if the above example methods.

In another example embodiment there is provided a device. The device may a communication module configured to at least receive data, a memory module configured to buffer the received data, and a data presentation module configured to present the received data at different presentation rates including at least a first presentation rate and a second presentation rate.

The above example device may be further configured, wherein the received data includes multimedia content and presenting the received data comprises at least one of displaying video content or playing audio content.

The above example device may be further configured, wherein the data is received by the communication module in a substantially continuous manner.

The above example device may be further configured, wherein the data presentation module is further configured to present the received data at the first presentation rate until a threshold condition occurs, and to then present the received data at the second presentation rate. In this configuration, the example device may be further configured, wherein the threshold condition is an amount of data received in the memory module. In this configuration, the example device may be further configured, wherein the threshold condition is based on quality for a connection over which the communication module receives the data.

The above example device may be further configured, wherein the first presentation rate is less than the second presentation rate. In this configuration, the example device may be further configured, wherein the difference between presentation of the received data at the first presentation rate and presentation of received data at the second presentation rate is substantially imperceptible to a user of the device viewing the presentation.

The above example device may further comprise a processing module, the data presentation module being configured to cause the processing module to present the received data at a first presentation rate and to then present the received data at a second presentation rate.

In another example embodiment there is provided a method. The method may include receiving data in a device, storing the received data in a device memory and presenting the received data at different presentation rates including at least a first presentation rate and a second presentation rate.

The above example method may be further configured, wherein the received data includes multimedia content and presenting the received data comprises at least one of displaying video content or playing audio content.

The above example method may be further configured, wherein the data is received in a substantially continuous manner.

The above example method may be further configured, wherein the received data is presented at the first presentation rate until a threshold condition occurs, and is then presented at the second presentation rate. In this configuration, the example method may be further configured, wherein the threshold condition is an amount of data received in the device memory. In this configuration, the example method may be further configured, wherein the threshold condition is based on quality for a connection over which the data is received in the device.

The above example method may be further configured, wherein the first presentation rate is less than the second presentation rate. In this configuration, the example method may be further configured, wherein the difference between presentation of the received data at the first presentation rate and presentation of received data at the second presentation rate is substantially imperceptible to a user of the device viewing the presentation.

In another example embodiment there is presented a system. The system may include means for receiving data in a device, means for storing the received data in a device memory, and means for presenting the received data at different presentation rates including at least a first presentation rate and a second presentation rate.

The above example system may be further configured, wherein the received data includes multimedia content and presenting the received data comprises at least one of displaying video content or playing audio content.

The above example system may be further configured, wherein the data is received in a substantially continuous manner.

The above example system may be further configured, wherein the received data is presented at the first presentation rate until a threshold condition occurs, and is then presented at the second presentation rate. In this configuration, the example system may be further configured, wherein the threshold condition is an amount of data received in the device memory. In this configuration, the example system may be further configured, wherein the threshold condition is based on quality for a connection over which the data is received in the device.

The above example system may be further configured, wherein the first presentation rate is less than the second presentation rate. In this configuration, the example system may be further configured, wherein the difference between the presentation of the received data at the first presentation rate and the presentation of received data at the second presentation rate is substantially imperceptible to a user of the device viewing the presentation.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the claims. Accordingly, the claims are intended to cover all such equivalents.

## Claims

1. A device, comprising:
a communication module configured to at least receive data;
a memory module configured to buffer the received data; and
a data presentation module configured to present the received data at different presentation rates including at least a first presentation rate and a second presentation rate.

2. The device of claim 1, wherein the received data includes multimedia content and presenting the received data comprises at least one of displaying video content or playing audio content.

3. The device of claim 1, wherein the data presentation module is further configured to present the received data at the first presentation rate until a threshold condition occurs, and to then present the received data at the second presentation rate.

4. The device of claim 3, wherein the threshold condition is an amount of data received in the memory module.

5. The device of claim 3, wherein the threshold condition is based on quality for a connection over which the communication module receives the data.

6. The device of claim 1, wherein the first presentation rate is less than the second presentation rate, the difference between presentation of the received data at the first presentation rate and presentation of received data at the second presentation rate being substantially imperceptible to a user of the device viewing the presentation.

7. A method, comprising:
receiving data in a device;
storing the received data in a device memory; and
presenting the received data at different presentation rates including at least a first presentation rate and a second presentation rate.

8. The method of claim 7, wherein the received data includes multimedia content and presenting the received data comprises at least one of displaying video content or playing audio content.

9. The method of claim 7, wherein the received data is presented at the first presentation rate until a threshold condition occurs, and is then presented at the second presentation rate.

10. The method of claim 9, wherein the threshold condition is an amount of data received in the device memory.

11. The method of claim 9, wherein the threshold condition is based on quality for a connection over which the data is received in the device.

12. The method of claim 7, wherein the first presentation rate is less than the second presentation rate, the difference between presentation of the received data at the first presentation rate and presentation of received data at the second presentation rate being substantially imperceptible to a user of the device viewing the presentation.

13. A system including at least a device and a data source, the system being arranged to perform the method of any of the claims 7 to 12.

14. A chipset arranged to perform the method of any of the claims 7 to 12.

15. At least one machine readable medium comprising a plurality of instructions that, in response to be being executed on a computing device, cause the computing device to carry out the method according to any one of claims 7 to 12.
